# EUROPEAN PATENT APPLICATION

(11) **EP 1 431 916 A1**
(43) Date of publication of application: **23.06.2004**
(21) Application number: 03257840.3
(22) Date of filing: 12.12.2003
(51) Int. Cl.: G06T 7/00

(54) **System and method for computer assisted reconciliation of medical classification data**

(30) Priority: 18.12.2002 US 323986
(71) Applicant: GE Medical Systems Global Technology Company LLC, Waukesha, Wisconsin 53188 (US)
(72) Inventor: Sabol, John M., Sussex, Wisconsin 53089 (US); Avinash, Gopal B., New Berlin, Wisconsin 53151 (US); Walker, Matthew J., New Berlin, Wisconsin 53151 (US)
(74) Representative: Pedder, James Cuthbert

(57) **Abstract**

A technique for independently reviewing the detection or classification of features of interest within a set of image data (52). A computer implemented CAD module is used to independently classify (70) features of interest identified by a human agent or to independently identify (90) and classify (96) features of interest. Discrepancies between the computer implemented feature identifications (92) or classifications (72, 98) and the human determinations (68) may be reconciled (80) by a computer assisted reconciliation process.

## Description

The present technique relates generally to computer imaging techniques and more particularly to the use of computer implemented routines to classify features identified in an image data set. More specifically, the present technique relates to the use of computer implemented routines to provide independent classifications of identified features.

Various technical fields engage in some form of image evaluation and analysis in which the identification and classification of recognizable features within the image data is a primary goal. For example, medical imaging technologies produce various types of diagnostic images which a doctor or radiologist may review for the presence of identifiable features of diagnostic significance. Similarly, in other fields, other features may be of interest. For example, non-invasive imaging of package and baggage contents may similarly be reviewed to identify and classify recognizable features. In addition, the analysis of satellite and radar weather data may involve the determination of what weather formations, such as tornados or other violent storms, are either present in the image data or are in the process of forming. Likewise, evaluation of astronomical and geological data represented visually may also involve similar feature identification exercises. With the development of digital imaging and image processing techniques, the quantity of readily available image data requiring analysis in many of these technical fields has increased substantially.

Indeed, the increased amounts of available image data may inundate the human resources, such as trained technicians, available to process the data. To aid these technicians, computer implemented techniques may be employed. For example, these techniques may provide a preliminary analysis of the image data, flagging areas of interest for subsequent review by a trained technician.

For example, in the realm of medical imaging, computer assisted detection (CAD) or diagnosis (CADx) algorithms have been developed to supplement and assist radiologist review of diagnostic images. CAD is typically based upon various types of image analysis implementations in which the collected image is analyzed in view of certain known pathologies, that may be highlighted by the CAD algorithm. CAD has been developed to complement various medical imaging modalities including digital X-ray, magnetic resonance imaging, ultrasound and computed tomography. The development of CAD for these various modalities is generally desirable because CAD provides valuable assistance and time-savings to the reviewing radiologist.

However, as computer implemented assistance, such as CAD, becomes more prevalent, techniques for assuring quality control and independent analysis of the data may also be desirable. For example, as noted with regard to CAD, computer assistance is typically employed initially to analyze image data and to highlight regions of interest for further review by a trained technician. However, no independent assessment of the actions of the human agent are necessarily performed in this arrangement. Instead, the human agent merely assesses the quality of detection and classification provided by the computer implemented routines. An assessment of the performance of the human agent may be desirable, however.

Likewise, it is often desirable to have a second trained technician verify the initial reading. This is a rather time-consuming and expensive practice, but one that is highly valued, particularly in medical diagnostics. Due to reasons of time and budget, as well as the relative scarcity of trained personnel, no technician or clinician may be available to independently review the decisions of the primary reviewer based upon the computer implemented assistance provided to that reviewer. Such an independent assessment of both the reviewer and the computer implemented assistance may be desirable as well. There is a need, therefore, for techniques for improved independent review of both a reviewing technician or clinician as well as of the computer implemented aid provided to the technician or clinician.

The present invention provides a technique for employing computer implemented classification routine to independently classify image features detected and classified by a human agent. Discrepancies between the human and the computer classifications may be reconciled by the same human agent, by another, or in an automated or semi-automated manner. In an additional embodiment, an independent computer implemented detection and classification routine is performed on the image as well. Discrepancies between the computer and human detected sets of features, as well as between the respective computer and human classifications of the features, may then be reconciled in similar manners.

In accordance with one aspect of the present technique, a method for analyzing an image for use by an end user is provided. The method includes providing an image data set to one or more human analysts. The human analyst detects one or more features within the image data set to produce a feature detected data set. The feature detected data set is provided to one or more human classifiers who classify each feature with a first classification to produce a human-classified data set. The feature detected data set is subjected to one or more computer implemented classification routines which classify each of the one or more features with a second classification to produce a computer classified data set. The human classified data sets and the computer classified data sets are combined to form an integrated image data set. One or more discrepancies between the human classified data sets and the computer classified data sets which are present in the integrated image data set are reconciled to form a final image data set.

In accordance with another aspect of the present technique, a method is provided for analyzing an image for use by an end user. The method includes providing an image data set to one or more human analysts. The human analyst detects a first set of features within the image data set to produce a feature detected data set. The feature detected data set is provided to one or more human classifiers who classify each feature within the first set with a human classification to produce a human classified data set. The feature detected data set is subjected to one or more first computer implemented classification routines which classify each feature within the first set with a first classification to produce a first computer classified data set. The image data set is subjected to one or more computer implemented detection routines which detects a second set of features within the image data set to produce a computer detected data set. The computer detected data set is subjected to one or more second computer implemented classification routine which classify each feature within the second set with a second classification to produce a second computer classified data set. The human classified data set, the first computer classified data set, and the second computer classified data set are combined to form an integrated image data set. One or more discrepancies between the human classified data set, the first computer classified data set, and the second computer classified data set which are present in the integrated image data set are reconciled to form a final image data set.

In accordance with an additional aspect of the present technique, an image analysis system is provided. The system includes an imager, system control circuitry configured to operate the imager, and data acquisition circuitry configured to access an image data set acquired by the imager. In addition, the system includes an operator interface configured to interact with at least one of the system control circuitry and the data processing circuitry. The operator interface is further configured to allow a human analyst to detect one or more features within the image data set to form a feature detected data set and to classify each feature with a human classification to produce a human-classified data set. Data processing circuitry is also included which is configured to apply a computer implemented classification routine to the feature detected data set to classify each feature with a second classification to produce a computer classified data set. The data processing circuitry is configured to combine the human classified data set and the computer classified data set to form an integrated image data set. The data processing circuitry is further configured to reconcile the human classified data set and the computer classified data set to form a final image data set.

In accordance with a further aspect of the present technique, an image analysis system is provided. The system includes an imager, system control circuitry configured to operate the imager, and data acquisition circuitry configured to access an image data set acquired by the imager. In addition, the system includes an operator interface configured to interact with at least one of the system control circuitry and the data processing circuitry. The operator interface is further configured to allow a human analyst to detect a first set of one or more features within the image data set and to classify each feature of the first set with a human classification to produce a human-classified data set. Data processing circuitry is also included which is configured to apply a first computer implemented classification routine to classify each feature of the first set of features with a first computer classification to produce a first computer classified data set. The data processing circuitry is also configured to apply a computer implemented detection routine to the image data set to detect a second set of features. The data processing circuitry is configured to apply a second computer implemented classification routine to classify each feature of the second set of features with a second computer classification to produce a second computer classified data set. In addition, the data processing circuitry is configured to combine the human classified data set, the first computer classified data set, and the second computer classified data set to form an integrated image data set. The data processing circuitry is also configured to reconcile one or more discrepancies between the human classified data set, the first computer classified data set, and the second computer classified data which are present in the integrated image data set to form a final image data set.

In accordance with another aspect of the present technique, an image analysis system is provided. The system includes an imager, system control circuitry configured to operate the imager and data acquisition circuitry configured to access an image data set acquired by the imager. In addition, the system includes an operator interface configured to interact with at least one of the system control circuitry and the data processing circuitry. The operator interface is further configured to allow a human analyst to detect one or more features within the image data set and to classify each feature with a human classification to produce a human-classified data set. Data processing circuitry is also present which includes means for obtaining a second opinion regarding the classification of each feature.

In accordance with a further aspect of the present technique, an image analysis system is provided. The system includes an imager, system control circuitry configured to operate the imager, and data acquisition circuitry configured to access an image data set acquired by the imager. In addition, the system includes an operator interface configured to interact with at least one of the system control circuitry and the data processing circuitry. The operator interface is further configured to allow a human analyst to detect a first set of one or more features within the image data set and to classify each feature within the first set with a human classification to produce a human-classified data set. The system also includes data processing circuitry which includes means for obtaining a second classification of each feature within the first set of features. The data processing circuitry also includes means for obtaining a second set of features within the image data set and means for classifying the second set of features.

In accordance with an additional aspect of the present technique, a tangible medium is provided. The tangible medium includes a routine for subjecting a data set comprising one or more features detected by a human operator to a computer implemented classification algorithm which assigns a computer classification to each of the one or more features. In addition, the tangible medium includes a routine for combining a human classification assigned by a human classifier and the computer classification of each feature to form an integrated image data set. The tangible medium also includes a routine for reconciling one or more discrepancies in the integrated image data set between the human classifications and the computer classifications to form a final image data set.

In accordance with another aspect of the present technique, a tangible medium is provided. The tangible medium includes a routine for subjecting a data set comprising one or more features detected by a human operator to a first computer implemented classification routine which assigns a first computer classification to each of the one or more features. A routine for subjecting the image data set to a computer implemented detection algorithm which detects a second set of features within the image data set is also included. In addition, the tangible medium includes a routine for classifying each feature within the second set with a second classification using a second computer implemented classification algorithm. The tangible medium also includes a routine for combining a human classification assigned by a human classifier, the first computer classification, and the second computer classification of each feature to form an integrated image data set. Also included is a routine for reconciling one or more discrepancies in the integrated image data set between the human classifications and the first and second computer classifications to form a final image data set.

In accordance with an additional aspect of the present invention, a method is provided for reviewing two or more classifications of a set of image data. Two or more feature classification sets based upon an image data set provided by two or more respective classifiers are automatically compared. A notice based upon the comparison is generated.

The invention will now be described in greater detail, by way of example, with reference to the drawings, in which:-
Fig. 1 is a general diagrammatical representation of certain functional components of an exemplary image data-producing system, in the form of a medical diagnostic imaging system;
Fig. 2 is a diagrammatical representation of a particular imaging system of the type shown in Fig. 1, in this case an exemplary X-ray imaging system which may be employed in accordance with certain aspects of the present technique;
Fig. 3 is a flowchart depicting an embodiment of the present technique utilizing one or more CAD classification algorithms;
Fig. 4 is a representation of a set of medical image data including features to be detected and classified;
Fig. 5 is a representation of the set of medical image data of Fig. 4 after feature detection by a physician;
Fig. 6 is a representation of the set of medical image data of Fig. 5 after feature classification by a physician;
Fig. 7 is a representation of the set of medical image data of Fig. 5 after feature classification by a CAD classification algorithm;
Fig. 8 is a representation of the set of medical image data of Figs. 6 and 7 after integration;
Fig. 9 is a representation of the set of medical image data of Figs. 6 and 7 after reconciliation;
Fig. 10 is a representation of the set of medical image data of Fig. 4 after feature detection by a CAD detection algorithm;
Fig. 11 is a representation of the set of medical image data of Fig. 10 after feature classification by a CAD classification algorithm;
Fig. 12 is a representation of the set of medical image data of Figs. 6, 7, and 11 after integration; and
Fig. 13 is a representation of the set of medical image data of Figs. 6, 7, and 11 after reconciliation.

The present technique pertains to the computer assisted processing of digital image data of various sorts, including analog image data that has been digitized. For simplicity, and in accordance with a presently contemplated implementation, the following example discusses the technique in the context of medical imaging. However it is to be understood that the technique is not limited to medical imaging. Instead, any digital imaging implementation in which particular regions of interest may be selected for their significance may benefit from the following technique. Digital image data of a general or technical nature, such as meteorological, astronomical, geological and medical, which may employ computer implemented routines to assist a human agent in feature identification and classification may benefit from the present technique.

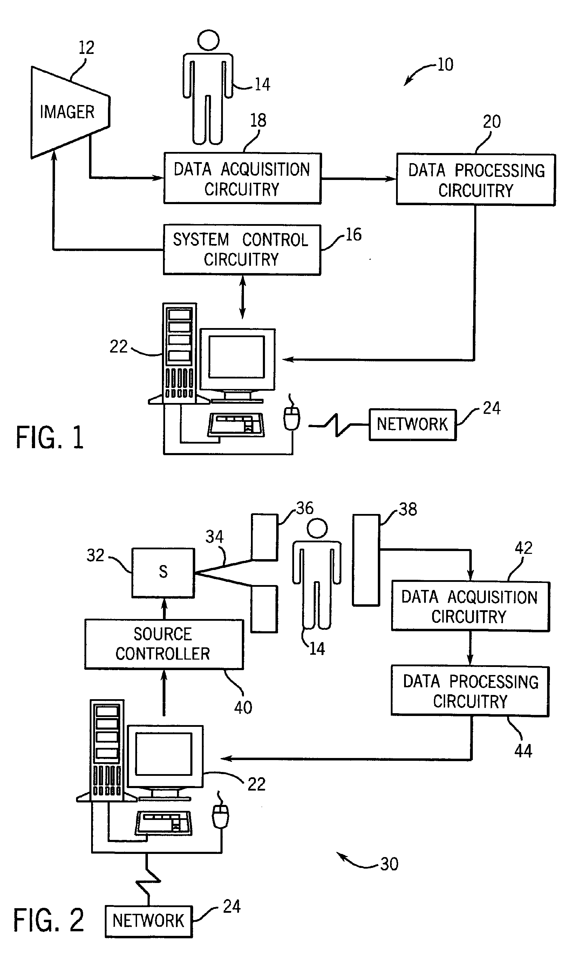

In the context of medical imaging, various imaging resources may be available for diagnosing medical events and conditions in both soft and hard tissue, and for analyzing features and function of specific anatomies. Fig. 1 provides a general overview for exemplary imaging systems, and subsequent figures offer somewhat greater detail into the major system components of a specific modality system. Such medical imaging systems may include, but are not limited to, medical imaging modalities such as digital X-ray, Computed Tomography (CT), Magnetic Resonance Imaging (MRI), Positron Emission Tomography (PET), thermoacoustic imaging, optical imaging, and nuclear medicine-based imaging.

Referring to Fig. 1, an imaging system 10 generally includes some type of imager 12 which detects signals and converts the signals to useful data. As described more fully below, the imager 12 may operate in accordance with various physical principles for creating the image data. In general, however, in the medical imaging context image data indicative of regions of interest in a patient 14 are created by the imager in a digital medium.

The imager 12 operates under the control of system control circuitry 16. The system control circuitry may include a wide range of circuits, such as radiation source control circuits, timing circuits, circuits for coordinating data acquisition in conjunction with patient or table of movements, circuits for controlling the position of radiation or other sources and of detectors, and so forth. The imager 12, following acquisition of the image data or signals, may process the signals, such as for conversion to digital values, and forwards the image data to data acquisition circuitry 18. In digital systems, the data acquisition circuitry 18 may perform a wide range of initial processing functions, such as adjustment of digital dynamic ranges, smoothing or sharpening of data, as well as compiling of data streams and files, where desired. The data are then transferred to data processing circuitry 20 where additional processing and analysis are performed. For the various digital imaging systems available, the data processing circuitry 20 may perform substantial analyses of data, ordering of data, sharpening, smoothing, feature recognition, and so forth.

Ultimately, the image data are forwarded to some type of operator interface 22 for viewing and analysis. While operations may be performed on the image data prior to viewing, the operator interface 22 is at some point useful for viewing reconstructed images based upon the image data collected. The images may also be stored in short or long-term storage devices, for the present purposes generally considered to be included within the interface 22, such as picture archiving communication systems. The image data can also be transferred to remote locations, such as via a network 24. It should also be noted that, from a general standpoint, the operator interface 22 affords control of the imaging system, typically through interface with the system control circuitry 16. Moreover, it should also be noted that more than a single operator interface 22 may be provided. Accordingly, an imaging scanner or station may include an interface which permits regulation of the parameters involved in the image data acquisition procedure, whereas a different operator interface may be provided for manipulating, enhancing, and viewing resulting reconstructed images.

To discuss the technique in greater detail, a specific medical imaging modality based upon the overall system architecture outlined in Fig. 1 is depicted in Fig. 2. Fig. 2 generally represents a digital X-ray system 30. System 30 includes a radiation source 32, typically an X-ray tube, designed to emit a beam 34 of radiation. The radiation may be conditioned or adjusted, typically by adjustment of parameters of the source 32, such as the type of target, the input power level, and the filter type. The resulting radiation beam 34 is typically directed through a collimator 36 which determines the extent and shape of the beam directed toward patient 14. A portion of the patient 14 is placed in the path of beam 34, and the beam impacts a digital detector 38.

Detector 38, which typically includes a matrix of pixels, encodes intensities of radiation impacting various locations in the matrix. A scintillator converts the high energy X-ray radiation to lower energy photons which are detected by photodiodes within the detector. The X-ray radiation is attenuated by tissues within the patient, such that the pixels identify various levels of attenuation resulting in various intensity levels which will form the basis for an ultimate reconstructed image.

Control circuitry and data acquisition circuitry are provided for regulating the image acquisition process and for detecting and processing the resulting signals. In particular, in the illustration of Fig. 2, a source controller 40 is provided for regulating operation of the radiation source 32. Other control circuitry may, of course, be provided for controllable aspects of the system, such as a table position, radiation source position, and so forth. Data acquisition circuitry 42 is coupled to the detector 38 and permits readout of the charge on the photo detectors following an exposure. In general, charge on the photo detectors is depleted by the impacting radiation, and the photo detectors are recharged sequentially to measure the depletion. The readout circuitry may include circuitry for systematically reading rows and columns of the photo detectors corresponding to the pixel locations of the image matrix. The resulting signals are then digitized by the data acquisition circuitry 42 and forwarded to data processing circuitry 44.

The data processing circuitry 44 may perform a range of operations, including adjustment for offsets, gains, and the like in the digital data, as well as various imaging enhancement functions. The resulting data are then forwarded to an operator interface or storage device for short or long-term storage. The images reconstructed based upon the data may be displayed on the operator interface, or may be forwarded to other locations, such as via a network 24, for viewing. Also, digital data may be used as the basis for exposure and printing of reconstructed images on a conventional hard copy medium such as photographic film.

When in use, the digital X-ray system 30 acquires digital X-ray images of a portion of the patient 14 which may then be analyzed for the presence of indicia of one or more medical pathologies such as nodules, lesions, fractures, microcalcifications, etc. Other imaging modalities of course may be better suited for detecting different types of anatomical features. In practice, a clinician may initially review a medical image, such as an X-ray, and detect features or features of diagnostic significance within the image. The clinician may then assign a classification to each feature. For reasons of quality assurance, a second clinician may independently classify the identified features. Discrepancies between the classifications of the first and second clinician could then be reconciled via mutual consultation or some predetermined resolution mechanism, such as some prioritizing criterion or third party consultation. Alternatively, the first and second clinician may independently read the image data, performing independent detection as well as classification. Discrepancies between the analyses could be resolved by the similar means to those discussed above.

The net effect of these different levels of independent review is to improve the overall quality of the analysis and subsequent diagnosis. In particular, the use of independent reviews is ultimately directed toward reducing the incidence of false positives, i.e. indicating a pathological condition when none is present, and false negatives, i.e. failing to indicate a pathological condition when one is present. In practice, however, these types of independent reviews may be absent in settings in which computerized assistance in the form of CAD algorithms has been adopted.

For example, as will be appreciated by those skilled in the art, CAD algorithms may offer the potential for identifying, or at least localizing, certain features of interest, such as anatomical anomalies, and differentially processing such features. CAD algorithms may be considered as including various modules or subroutines for performing not only image segmentation and feature selection but also feature classification. The various possible CAD modules may or may not all be implemented in the present technique.

The particular CAD implementation is commonly selected based upon the type of feature to be identified, and upon the imaging modality used to create the image data. The CAD technique may employ segmentation algorithms, which identify the features of interest by reference to known or anticipated image characteristics, such as edges, identifiable features, boundaries, changes or transitions in colors or intensities, changes or transitions in spectrographic information, and so forth. The CAD algorithm may facilitate detection alone or may also facilitate diagnosis. Subsequent processing and data acquisition is often entirely at the discretion and based upon the expertise of the practitioner.

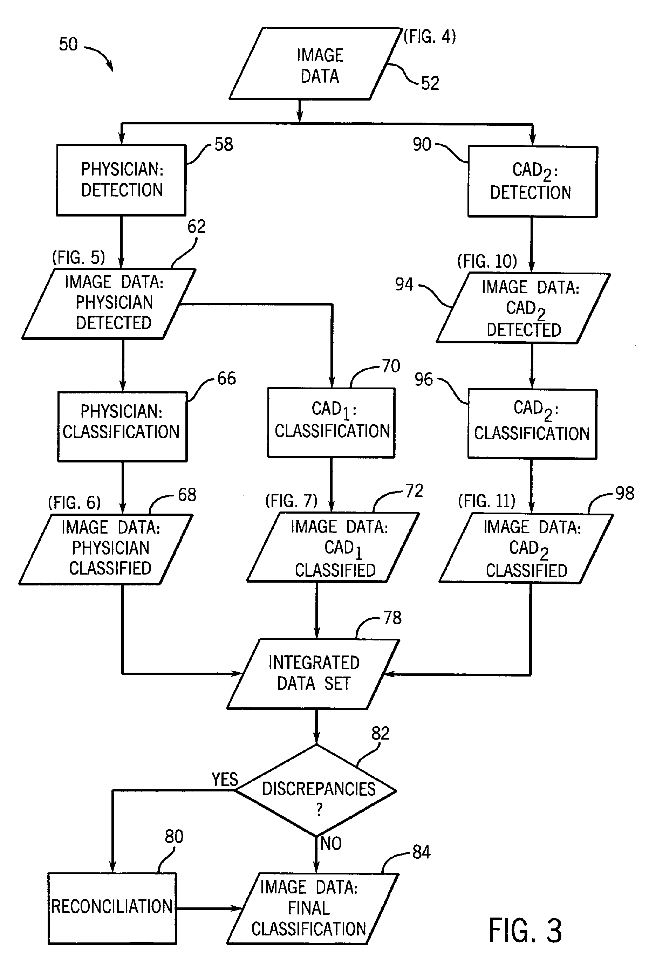

Therefore, in practice, the use of independent analyses by two or more human clinicians may be replaced by a single, final review by a human clinician. In such implementations, no independent classification opinion may be obtained for the detected features, thereby providing no second opinion regarding classification to assure quality and accuracy. One technique which utilizes an implementation of CAD algorithms to provide such a second opinion is depicted in Fig. 3.

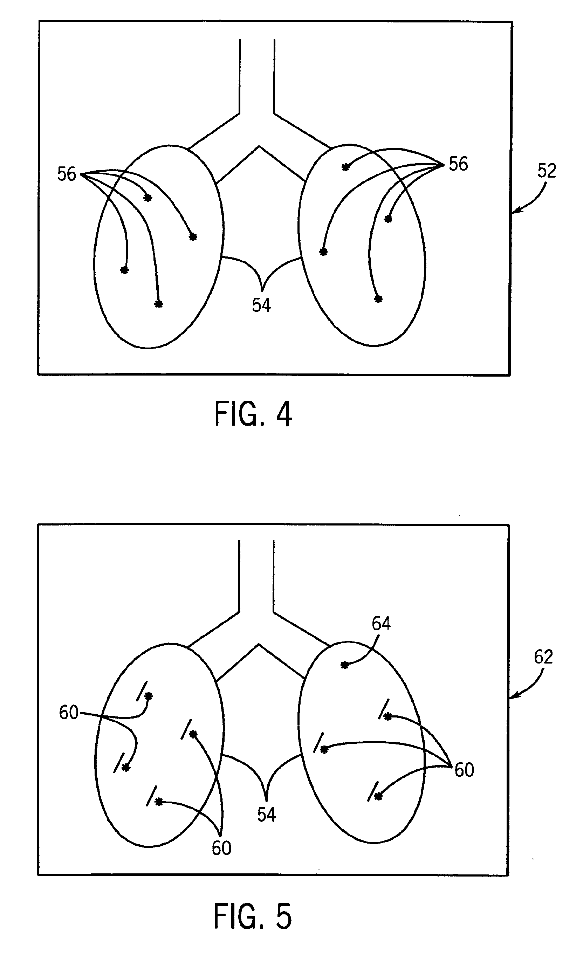

As depicted in Figs. 3, the image review process 50 begins with an initial set of image data 52 such as may be acquired by a system like the digital X-ray imaging system 30 of Fig. 2. For the purposes of example only, the image data 52 are depicted in greater detail in Fig. 4 as a digital X-ray image of a pair of lungs 54 possessing various features 56 of interest. This image data may be initially read by a human agent, such as a physician, clinician, or radiologist, to detect features 56, as indicated at step 58. The image data set 52 along with the human detected features 60 constitute a human-detected data set 62, as depicted in Fig. 5. For simplicity a single human-detected data set is depicted though of course more than one human agent may review the data and detect features 56, thereby generating more than one human-detected data set 62. Additional human-detected data sets 62 may be processed in accordance with the following discussion.

As depicted in Fig. 5, the feature detected image data set 62 includes the human detected features 60, signified by an adjacent forward-slash ( / ), as well as unidentified features 64 missed by the human agent. Various graphical indicia, text, overlays, colors, highlighting, and so forth may serve to indicate the detected features 60 if displayed. Also potentially present, though not illustrated here, are falsely identified features, which are non-features the human agent incorrectly identifies as features 56.

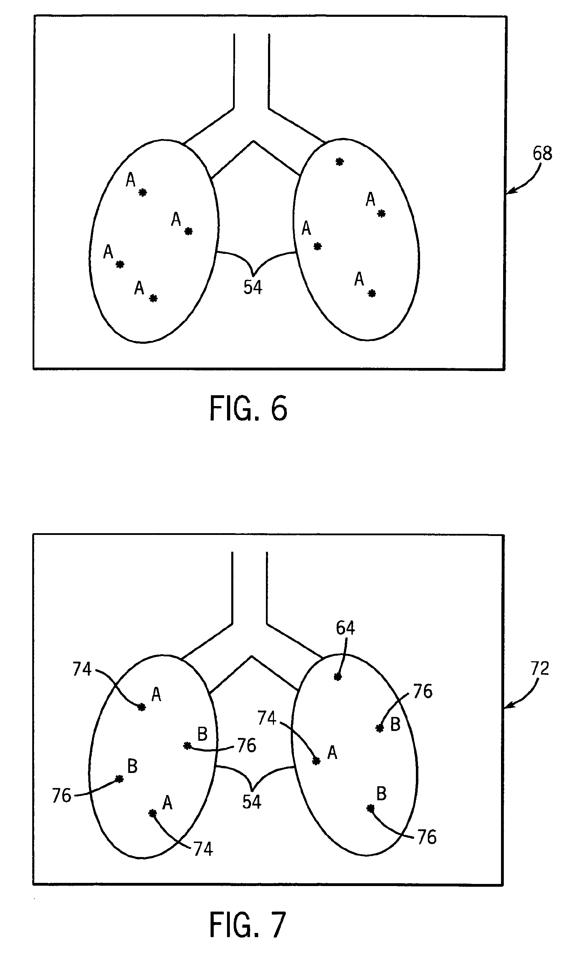

The detected features 60 are subsequently classified by a human agent, as indicated at step 66 of Fig. 3, to produce a human-classified data set 68, as depicted in Fig. 6. By means of example, the human-classification is represented by the reference letter A in Fig. 6. The human agent may also assign one or more measures of probability or certainty to the assigned classification during the classification process of step 66, possibly including probabilities of malignancy. As with feature detection, a single human-classified data set 68 is depicted for simplicity though of course more than one human may classify the detected features 60 to generate additional human-classified data sets 68. Additional human-classified data sets 68 may be processed in accordance with the following discussion.

Referring once again to Fig. 3, a computer implemented classification algorithm, such as a CAD classification module or routine, is applied at step 70 to the detected features 60 of human-detected data set 62. A computer classified data set 72, depicted in Fig. 7, results from the step 70 of applying the computer implemented classification algorithm to the human-detected data set 62. For the purpose of simplicity, features which have been classified similarly by both the computer classification algorithm and the human agent, i.e. concordant features 74, are indicated with the reference letter A used in Fig. 6 to indicate the human classification. Discordant features 76, where the computer classification algorithm and the human classification are in disagreement, are indicated by the reference letter B. No classification, understandably, is provided for any undetected features 64. The computer implemented algorithm may also generate statistical and probabilistic measures related to the computer assigned classification. As with, human classification, more than one computer implemented classification routine may be applied to the detected features 60 of human-detected data set 62 or sets to generate additional computer classified data sets 72. Additional computer classified data sets 72 may be processed in accordance with the following discussion.

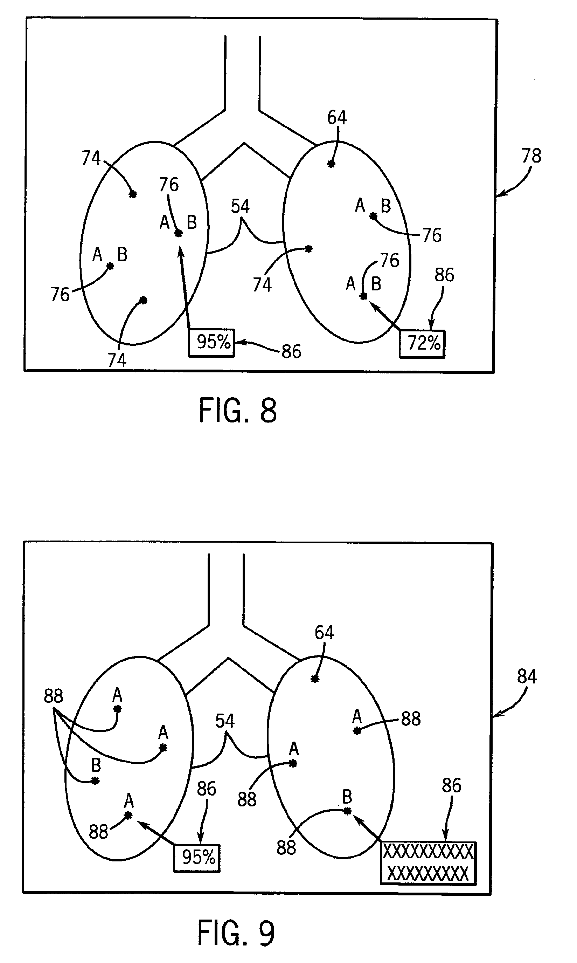

The human-classified data set 68 and computer classified data set 72 may then be combined to form an integrated data set 78, as depicted in Fig. 8. An example of such an integrated data set 78 might simply be a union data set created from the human-classified data set 68 and computer classified data set 72. In one embodiment, however, concordant features 74 may be masked in the integrated data set 78. In particular, concordant features 74 may be masked to simplify the presentation of the integrated data set 78 where a discrepancy reconciliation process, as depicted at step 80, may be subsequently performed on the integrated data set. In view of the discrepancy reconciliation process of step 80, the integrated data set may also present both the human classification and the computer classification for the discordant features 76 to facilitate reconciliation. In one embodiment, the human-classification and the computer classification are displayed differentially so that the reconciler can distinguish where a particular classification originated.

In particular, the discrepancy reconciliation process of step 80 is entered if discordant features 76 are present in the integrated data set, as determined at decision block 82. The discrepancy reconciliation process resolves discrepancies between the human and computer classifications, allowing a final classification image data set 84 to be formed. The discrepancy reconciliation process may be manual or automated. If manual, the human reconciler, whether the clinician who performed the detection or classification of features in steps 58 and 66 or an independent party, may review the displayed integrated data set 78. On the displayed integrated data set, the human reconciler may view and evaluate both the human and computer based classifications in determining what final classification to assign the detected feature 60.

To assist the human reconciler, additional information may be made available to the reconciler in the form of information cues 86 which may be automatically displayed or interactively displayed upon a request by the reconciler. These information cues may include information such as description or diagnostic criteria derived from medical journals, texts or databases, statistical and probabilistic information derived from the computer implemented classification step 70, current thresholds and settings utilized by the computer implemented classification step 70, or measures of certainty or probability provided by the human-agent during the human classification step 66. As depicted in the example of Fig. 8, the information cues 86 may be provided as interactive pop-up text or numerics which may be opened by moving a cursor over a discordant feature 76 and closed by moving the cursor away. In another embodiment, text, numerics or other forms of information cues may simply be displayed for each discordant feature 76 needing reconciliation and removed as the reconciler assigns final classifications to each discordant feature 76.

While text, interactive or otherwise, is one form of possible information cue 86 other visual or audible indicators may also be provided. For example various classifications, statistical data, CAD settings, or other relevant data may be conveyed by color-coding, gray-shading, geometric shapes, differential intensity which convey the information in a relatively simple and concise manner. Likewise, audible cues, such as an audible portion of a medical text or database, may be utilized and may be interactively invoked by the human reconciler, such as by moving a cursor over a discordant feature 76. In general, the information cues provide quantitative or qualitative information, either visually or audibly, to a reconciler or subsequent diagnostician regarding the classification of a detected feature 60.

Instead of being human, the reconciliation process could also be either a fully or partially computer assisted reconciliation (CAR) process. In a fully automated CAR process, the automated routine may assign a final classification to a discordant feature 76. A partially automated CAR process however may either consider additional information provided by a human agent prior to assigning a final classification or may only assign an advisory classification to each discordant feature 76 pending final acceptance by a human agent. In an automated process, a rule-based evaluation could be automatically implemented for each discordant feature 76 which evaluates such factors as the probabilities assigned by both the human agent and the computer implemented classification algorithm, historic performance of both the human agent and the computer implemented classification algorithm, or factors contained in an integrated medical knowledge base. An integrated medical knowledge base, for example may contain such information as family history, genetic predisposition, demographic data, prior diagnoses, medications, and so forth. One example of such a rule may be to accept the human-classification in instances where the human agent has indicated a greater degree of certainty than the computer implemented routine has indicated for the computer classification.

As noted above, the results of the discrepancy reconciliation process of step 80 are incorporated into a final classification image data set 84 in which each discordant feature 76 is assigned a final classification to form final classified features 88, as depicted in Fig 9. Of course, if concordant features 74 are present, as determined at decision block 82, a concurrence reconciliation process may be performed and the concordant features integrated into the final classification image data set 84. In addition, during the concurrence reconciliation process, if it is desired, a concurrence image may be generated for review of the concordant features 74, with or without the discordant features 76.

The final classification image data set 84 may be provided to a clinician or physician for use in diagnosing and treating the patient 14. As with the integrated data set 78, information cues 86 may be provided in the final classification image data set 84 to assist a viewer in evaluating the diagnostic significance of the final classified features 88. The information cues 74 may include particular information about the final classified feature 88, projected prognosis information, probability of malignancy, statistical information regarding the certainty of the classification, or more general information about that class of feature such as might be accessed in a medical text or journal or integrated medical knowledge base.

Referring once again to Fig 3, a separate and independent computer implemented CAD process may be employed as a CAD second reader. The CAD second reader may perform a fully independent analysis of the image data 52 including computer implemented feature detection as well as computer implemented feature classification. For simplicity a single CAD second reader is depicted though of course additional CAD algorithms may be employed as third and fourth readers and so forth. Additional CAD readers may be processed in accordance with the following discussion.

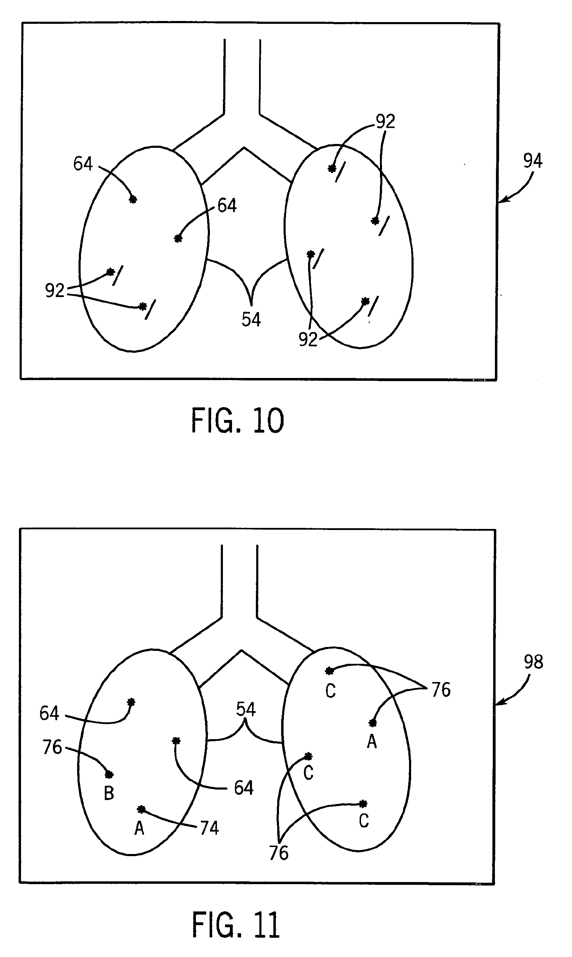

The computer implemented feature detection, as depicted at step 90 detects features 56 in the image data set 52. These computer detected features 92 along with the image data set 52 constitute a computer detected data set 94, as depicted in Fig. 10. As depicted in Fig. 10, the computer detected image data set 94 includes the computer detected features 92, signified by an adjacent forward-slash ( / ), as well as unidentified features 64 missed by the computer implemented detection routine. Various graphical indicia, text, overlays, colors, highlighting, and so forth may serve to indicate the detected features 60 if displayed. Also potentially present, though not illustrated here, are falsely identified features, which are non-features the computer implemented detection routine incorrectly identifies as features 56.

A computer implemented classification algorithm, such as a CAD classification module or routine, is applied at step 96 to the detected features 92 of the computer detected data set 94. A second computer classified data set 98, depicted in Fig. 11, results from the step 96 of applying the computer implemented classification algorithm to the computer detected data set 94. The computer implemented classification algorithms applied at steps 70 and 96 may be the same or different, depending on whether or not different classification criteria are desired. For example, a more conservative algorithm may be desired for the function of second reader. If, however, the same computer implemented classification algorithm is employed at steps 70 and 96, any features 56 detected by both the human agent at step 58 and the computer implemented detection routine at step 90 will be identically classified.

For purposes of illustration, however, the computer implemented classification algorithms applied at steps 70 and 96 will be assumed to be different. For the purpose of simplicity, in Fig. 11, features which have been classified similarly by both computer classification algorithms and by the human agent, i.e. concordant features 74, are indicated with the reference letter A used previously to indicate the human classification. In Fig. 11, discordant features 76 in which the computer classification algorithm implemented at step 96 is in agreement with the human classification but not with the computer classification algorithm implemented at step 70 are also indicated by the reference letter A to indicate the human classification. However, discordant features 76 in which the computer classification algorithm implemented at step 96 is in agreement with the computer classification algorithm implemented at step 70 but not with the human classification are indicated by the reference letter B to indicate agreement of the computer implemented classifications. Likewise, discordant features 76 in which the computer classification algorithm implemented at step 96 is either in disagreement with both the computer classification algorithm implemented at step 70 and the human classification or in which the computer detected feature 92 was not detected by the human agent at step 58 are indicated by the reference letter C. No classification, understandably, is provided for any undetected features 64. The computer classification algorithm implemented at step 96 may also generate statistical and probabilistic measures related to the computer assigned classification.

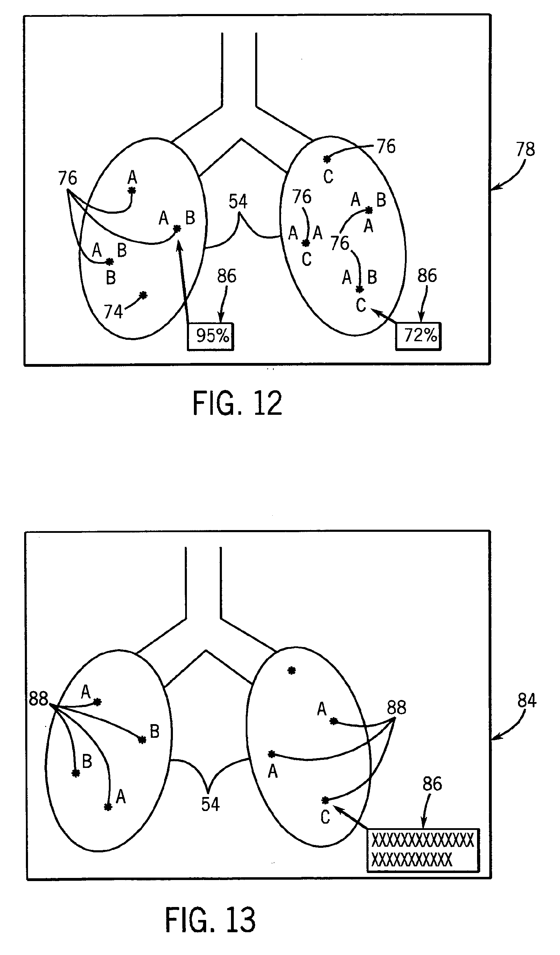

The human-classified data set 68 and two computer classified data sets 72, 98 may then be combined to form an integrated data set 78, depicted in Fig. 12, as previously discussed. For purposes of illustration, Fig. 12, depicts the classification agreement associated with each discordant feature 76 as described above as well those classifications associated with features 56 only recognized by one of detections steps 58 and 90. To facilitate reconciliation by a human agent, as previously discussed, the discordant classifications may be associated with the source of the classification as well as with probabilities or measures of certainty arising with the classification. In one embodiment, the discordant human-classification and computer classifications are displayed differentially so that the reconciler can distinguish where a particular classification originated. Though Fig. 12 depicts a single integrated data set 78, the integrated data set 78 may actually be formed in stages. In particular, the results of the two computer classifications implemented in steps 70 and 96 may be integrated prior to the results of the human classification of step 66.

Discordant features 76 within the integrated data set 78 may be reconciled at step 80, as discussed previously, to produce the final classification image data 84 including the final classified features 88. If no discordant features 76 are present in the integrated data set 78, discrepancy reconciliation may be bypassed at decision block 82 and the concordant features 74 may be reconciled to form the final classification image data 84. As discussed previously, the final classification image data set 84 may be provided to a clinician or physician for use in diagnosing and treating the patient 14.

After the concurrence and discrepancy reconciliation processing and the formation of the final classification image data set 84, any designated personnel, such as readers, physicians, or other technical personnel, may receive a notice of the results, such as by displayed message, e-mail, result report, and so forth. In addition, though not depicted, a notice may also be issued to the designated personnel in the event that no features are detected by the various readers or if, in the integrated data set 78, there is complete concurrence between the various readers or various classifiers. In these instances, no further images may be displayed due to the absence of detected features or of disagreement. The notice, therefore, may conclude the review process by providing the relevant information, such as no detected features, concurrence for all detected features, etc., to the necessary personnel.

By means of the present technique, a mechanism for assuring quality control in the processing of image data is provided. In particular, a human analysis of the image data may be assessed in the context of one or more independent computer CAD reviews, with any discrepancies being more intensely scrutinized. The use of independent computer implemented reviews of either feature detection or classification reduces the risk of either false positives or false negatives which might otherwise result.

While the invention may be susceptible to various modifications and alternative forms, specific embodiments have been shown by way of example in the drawings and have been described in detail herein. However, it should be understood that the invention is not intended to be limited to the particular forms disclosed. In particular, though the discussed embodiments relate to medical imaging, it is to be understood than other forms of technical image analysis and non-invasive imaging, such as baggage and package screening, as well as meteorological, astronomical, geological, and non-destructive material inspection image analysis, may benefit from the discussed technique. Indeed, any form of digital image processing in which features of interest are detected and/or classified may benefit from this technique.

For the sake of good order, various aspects of the invention are set out in the following clauses:-
1. A method for processing an image for use by an end user, comprising:
   providing an image data set (52) to one or more human analysts, wherein the human analyst detects (58) one or more features (60) within the image data set (52) to produce a feature detected data set (62);
   providing the feature detected data set (62) to one or more human classifiers, wherein the human classifier classifies (66) each of the one or more features (60) with a first classification to produce a human classified data set (68);
   subjecting the feature detected data set (62) to one or more computer implemented classification routines which classify (70) each of the one or more features (60) with a second classification to produce a computer classified data set (72);
   combining the human classified data sets (68) and the computer classified data sets (72) to form an integrated image data set (78); and
   reconciling (80) one or more discrepancies (76) between the human classified data sets (68) and the computer classified data sets (72) which are present in the integrated image data set (78) to form a final image data set (84).
2. The method as recited in clause 1, wherein reconciling (80) one or more discrepancies (76) comprises manually reconciling one or more discrepancies (76).
3. The method as recited in clause 1, wherein reconciling (80) one or more discrepancies (76) comprises automatically reconciling one or more discrepancies (76) and wherein automatically reconciling comprises one of a full and a partial computer assisted reconciling routine.
4. The method as recited in clause 1, further comprising determining a preferred medical treatment for a patient (14) based upon the final image data set (84).
5. The method as recited in clause 1, further comprising displaying an information cue (86) to a viewer
6. The method as recited in clause 5, wherein the information cue (86) provides the viewer with at least one of a statistical measure, a classification description, a prognosis assessment, the first classification, and the second classification.
7. The method as recited in clause 5, wherein the information cue (86) comprises at least one of a visual marker, a text-based message, a numeric assessment, a color coding, and a differential shading.
8. The method as recited in clause 5, wherein the information cue (86) is provided in response to an action by at least one of the viewer and a human reconciler.
9. The method as recited in clause 1, wherein the image data set (52) is a medical diagnostic image.
10. The method as recited in clause 1, wherein the computer implemented classification routine is a CAD classification routine.
11. The method as recited in clause 1, wherein the human classifier is the human analyst.
12. An image analysis system (10), comprising:
   an imager (12);
   system control circuitry (16) configured to operate the imager (12);
   data acquisition circuitry (18) configured to access an image data set (52) acquired by the imager (12);
   an operator interface (22) configured to interact with at least one of the system control circuitry (16) and the data processing circuitry (20) and further configured to allow a human analyst to detect (58) one or more features (60) within the image data set (52) to form a feature detected data set (62) and to classify (66) each feature (60) with a human classification to produce a human classified data set (68); and
   data processing circuitry (20) configured to apply a computer implemented classification routine to the feature detected data set (62) to classify (70) each feature (60) with a second classification to produce a computer classified data set (72), to combine the human classified data set (68) and the computer classified data set (72) to form an integrated image data set (78), and to reconcile (80) the human classified data set (68) and the computer classified data set (72) to form a final image data set (84).
13. The image analysis system (10) as recited in clause 12, wherein the operator interface (22) is further configured to allow a human reconciler to manually input one or more reconciliation decisions to the data processing circuitry (20) to reconcile (80) one or more discrepancies (76).
14. The image analysis system (10) as recited in clause 12, wherein the data processing circuitry (20) is further configured to automatically reconcile one or more discrepancies (76) in one of a fully automated and a partially automated manner.
15. The image analysis system (10) as recited in clause 12, wherein the operator interface (22) is further configured to display one or more information cues (86) with at least one of the integrated image data set (78) and the final image data set (84).
16. The image analysis system (10) as recited in clause 15, wherein the one or more information cues (86) provide at least one of a statistical measure, a classification description, a prognosis assessment, the first classification, and the second classification.
17. The image analysis system (10) as recited in clause 15, wherein the one or more information cues (86) comprise at least one of a visual marker, a text-based message, a numeric assessment, a color coding, and a differential shading.
18. The image analysis system (10) as recited in clause 15, wherein the information cues (86) are provided interactively.
19. The image analysis system (10) as recited in clause 12, wherein the imager (12) is a medical imaging scanner.
20. The image analysis system (10) as recited in clause 19, wherein the medical imaging scanner (12) is at least one of an X-ray imaging system, a CT imaging system, a MRI scanning system, and a PET imaging system, a thermoacoustic imaging system, an optical imaging system, and a nuclear medicine-based imaging system.

## Claims

1. A method for processing an image for use by an end user, comprising:
providing an image data set (52) to one or more human analysts, wherein the human analyst detects (58) one or more features (60) within the image data set (52) to produce a feature detected data set (62);
providing the feature detected data set (62) to one or more human classifiers, wherein the human classifier classifies (66) each of the one or more features (60) with a first classification to produce a human classified data set (68);
subjecting the feature detected data set (62) to one or more computer implemented classification routines which classify (70) each of the one or more features (60) with a second classification to produce a computer classified data set (72);
combining the human classified data sets (68) and the computer classified data sets (72) to form an integrated image data set (78); and
reconciling (80) one or more discrepancies (76) between the human classified data sets (68) and the computer classified data sets (72) which are present in the integrated image data set (78) to form a final image data set (84).

2. The method as recited in claim 1, wherein reconciling (80) one or more discrepancies (76) comprises manually reconciling one or more discrepancies (76).

3. The method as recited in claim 1, wherein reconciling (80) one or more discrepancies (76) comprises automatically reconciling one or more discrepancies (76) and wherein automatically reconciling comprises one of a full and a partial computer assisted reconciling routine.

4. The method as recited in claim 1, further comprising determining a preferred medical treatment for a patient (14) based upon the final image data set (84).

5. The method as recited in claim 1, further comprising displaying an information cue (86) to a viewer

6. The method as recited in claim 5, wherein the information cue (86) provides the viewer with at least one of a statistical measure, a classification description, a prognosis assessment, the first classification, and the second classification.

7. An image analysis system (10), comprising:
an imager (12);
system control circuitry (16) configured to operate the imager (12);
data acquisition circuitry (18) configured to access an image data set (52) acquired by the imager (12);
an operator interface (22) configured to interact with at least one of the system control circuitry (16) and the data processing circuitry (20) and further configured to allow a human analyst to detect (58) one or more features (60) within the image data set (52) to form a feature detected data set (62) and to classify (66) each feature (60) with a human classification to produce a human classified data set (68); and
data processing circuitry (20) configured to apply a computer implemented classification routine to the feature detected data set (62) to classify (70) each feature (60) with a second classification to produce a computer classified data set (72), to combine the human classified data set (68) and the computer classified data set (72) to form an integrated image data set (78), and to reconcile (80) the human classified data set (68) and the computer classified data set (72) to form a final image data set (84).

8. The image analysis system (10) as recited in claim 7, wherein the operator interface (22) is further configured to allow a human reconciler to manually input one or more reconciliation decisions to the data processing circuitry (20) to reconcile (80) one or more discrepancies (76).

9. The image analysis system (10) as recited in claim 7, wherein the data processing circuitry (20) is further configured to automatically reconcile one or more discrepancies (76) in one of a fully automated and a partially automated manner.

10. The image analysis system (10) as recited in claim 7, wherein the operator interface (22) is further configured to display one or more information cues (86) with at least one of the integrated image data set (78) and the final image data set (84).
